# EUROPEAN PATENT APPLICATION

(11) **EP 4 424 856 A1**
(43) Date of publication of application: **04.09.2024**
(21) Application number: 22892399.1
(22) Date of filing: 09.09.2022
(51) Int. Cl.: C22B 9/18, C21C 7/00

(54) **FLUX USED IN ELECTRO-SLAG REMELTING PROCESS, METHOD FOR PRODUCING SAID FLUX, AND METHOD FOR PRODUCING HIGH-PURITY STEEL**

(30) Priority: 09.11.2021 JP 2021182353
(71) Applicant: Denka Company Limited, Tokyo 103-8338 (JP)
(72) Inventor: HIRATA, Satoshi, Tokyo 103-8338 (JP)
(74) Representative: Gulde & Partner
(86) International application number: PCT/JP2022/033883
(87) International publication number: WO 2023/084898

(57) **Abstract**

A flux used for an electroslag remelting method includes a mixture of particles including a CaF2 component and particles including an Al₂O₃ component and a CaO component, in which the flux has a W of 0.05% by mass or less and a ΔW of 0.03% by mass or less, for which the W is an initial water ratio in the flux which is determined by the Karl Fischer's method and the ΔW is a change in water ratio when the flux is placed in an environment of 30°C and 85% RH for 14 days.

## Description

### TECHNICAL FIELD

The present invention relates to a flux used for an electroslag remelting method, a method for manufacturing the flux, and a method for manufacturing a high-purity steel.

### BACKGROUND ART

The electroslag remelting method is a type of special melting method in which metal materials (for example, steel materials) are remelted and refined to produce high-purity metals. This method is also called the "ESR method", "ESR process", or the like, which is an acronym for the English notation Electro-Slag Remelting process (these notations are also used below in the present specification).

In the ESR method, metal materials are highly purified through a flow in which (1) first, an electrode metal is melted by the resistance heat of a slag, (2) impurities (sulfur, oxygen, and the like) are removed when droplets of the melted metal pass through the inside of a slag pool, (3) then, the melted metal solidifies into an ingot at the bottom of the furnace.

Here, as the slag, a slag in which the main components are CaF₂, Al₂O₃, and CaO is often used. That is, a solid-form flux in which the main components are CaF₂, Al₂O₃ and CaO is often melted at high temperature to form slag.

As an example, Patent Document 1 describes a slag used in an electroslag remelting method having an analyzed composition of SiO₂: 0.2 to 15% by weight, Al₂O₃: 12 to 40% by weight, alkaline earth metal oxide: 15 to 40% by weight, CaF₂: 12 to 75% by weight, FeO: 0.5% by weight or less, MnO: 1% by weight or less, and TiO₂: 10% by weight or less. In addition, the upper left column of page 2 of the document describes that, since the water derived from the flux causes hydrogen embrittlement in the metal material to be melted and refined, the water content in the slag should be reduced. Furthermore, the lower left column of page 3 of the document describes that the amount of water in the slag and changes therein over time were measured by heating a granular slag to 650°C and absorbing the released water with magnesium perchlorate.

As another example, Patent Document 2 describes that, using the ESR method, the composition of the flux to be added is set to CaO: 20 to 60% by mass, Al₂O₃: 10 to 40% by mass, CaF₂: 20 to 60% by mass, iron oxide: 1 to 10% by mass, and CaO/Al₂O₃: 1.0 to 6.0.

### RELATED DOCUMENT

### PATENT DOCUMENT

[Patent Document 1] Japanese Examined Patent Application, Second Publication No. S57-060411
[Patent Document 2] Japanese Unexamined Patent Application, First Publication No. 2013-049908

### SUMMARY OF THE INVENTION

### TECHNICAL PROBLEM

A known problem with the ESR method is that defects are easily generated in the obtained ingots, particularly at the bottom. Specifically, particularly in the initial stages of the entire ESR process, water derived from the flux is known to cause hydrogen embrittlement of the metal material to be melted and refined. The above is also described in Patent Document 1 mentioned in the Background Art section above.

However, as the present inventors discovered, there was room for improvement in fluxes having reduced amounts of water in the related art in terms of the problem of hydrogen embrittlement of metal materials and the omission of steps during the production of the metal materials. For example, there was room for further improvement in terms of improvement in the yield of ingots obtained by the ESR method, the need for a drying step with the object of reducing the amount of water in the flux during the production of the metal materials, and the like.

The present invention was created in view of these circumstances. An object of the present invention is to provide a flux used for an electroslag remelting method, with which it is possible to produce a high-purity metal having suppressed hydrogen embrittlement with a high yield while containing a highly hygroscopic CaO component.

### SOLUTION TO PROBLEM

As a result of intensive studies, the present inventors completed the invention provided below and solved the problems described above.

According to the present invention, there is provided a flux used for an electroslag remelting method, the flux including a mixture of particles including a CaF₂ component and particles including an Al₂O₃ component and a CaO component, in which the flux has a W of 0.05% by mass or less and a ΔW of 0.03% by mass or less, for which the W is an initial water ratio in the flux, which is determined by a Karl Fischer method, and the ΔW is a change in water ratio represented by a difference between a water ratio W₁₄ when the flux is placed in an environment of 30°C and 85% RH for 14 days and the initial water ratio W.

In addition, according to the present invention, there is provided a method for manufacturing the flux described above, the method including a calcining step of calcining at least a compound including a CaF₂ component to obtain particles including the CaF₂ component, a melt-mixing step of melt-mixing at least a compound including a CaO component and a compound including an Al₂O₃ component to obtain a melted mixture including the CaO component and the Al₂O₃ component, a pulverizing step of pulverizing the melted mixture including the CaO component and the Al₂O₃ component to obtain a pulverized product including the CaO component and the Al₂O₃ component, a sorting step of passing the pulverized product including the CaO component and the Al₂O₃ component through a sieve having a nominal opening of 500 um defined in accordance with JIS Z 8801-1:2019 to obtain particles including the CaO component and the Al₂O₃ component, and a mixing step of mixing at least the particles including the CaF₂ component and the particles including the CaO component and the Al₂O₃ component to obtain a flux.

In addition, according to the present invention, there is provided a method for manufacturing a high-purity steel including a step of refining raw steel into a high-purity steel by remelting the raw steel by an electroslag remelting method, in which a melted product of the flux described above is used as a melted slag.

### ADVANTAGEOUS EFFECTS OF INVENTION

According to the present invention, there is provided a flux used for an electroslag remelting method, with which it is possible to produce a high-purity metal having suppressed hydrogen embrittlement with a high yield.

### BRIEF DESCRIPTION OF THE DRAWINGS

Fig. 1 is a diagram for illustrating a method for manufacturing a high-purity steel using an electroslag remelting method.
Fig. 2 is a diagram for illustrating the method for manufacturing a high-purity steel using an electroslag remelting method.

### DESCRIPTION OF EMBODIMENTS

A detailed description will be given below of embodiments of the present invention with reference to the drawings.

In the drawings, similar constituent components are given the same reference numerals and descriptions are not repeated as appropriate.

To avoid complexity, in a case where there are a plurality of identical constituent components in the same drawing, only one thereof may be labeled with a reference numeral, or not all thereof may be provided with a reference numeral.

The drawings are for illustrative purposes only. The shapes, dimensional ratios, and the like of each member in the drawings do not necessarily correspond to the actual article.

In the present specification, the term "slag" basically expresses a state in which a flux, which is in solid-form at room temperature (25°C), is heated and melted at a high temperature. However, the above may change depending on the context (for example, in Patent Document 1, a flux that is in solid-form at room temperature seems to be expressed as "slag").

### <Flux>

The flux of the present embodiment is used in the electroslag remelting method.

The flux includes a mixture of particles including a CaF₂ component and particles including an Al₂O₃ component and a CaO component, in which the flux has a W of 0.05% by mass or less and a ΔW of 0.03% by mass or less, for which the W is an initial water ratio (water ratio when the number of storage days is 0) in the flux which is determined by the Karl Fischer method and the ΔW is a change in water ratio (water ratio W₁₄ after 14 days-initial water ratio W) represented by a difference between a water ratio W₁₄ when the flux is placed in an environment of 30°C and 85% RH for 14 days and the initial water ratio W. At this time, the W is 0.05% by mass or less, preferably 0.03% by mass or less, more preferably 0.02% by mass or less, and even more preferably 0.015% by mass or less. In addition, the ΔW is 0.03% by mass or less, preferably 0.01% by mass or less, more preferably 0.007% by mass or less, and even more preferably 0.005% by mass or less.

Here, the lower limit of the W is ideally 0, but realistically is, for example, 0.00001% by mass or more. In addition, the lower limit value of ΔW is, for example, -0.005% or more.

In addition, the initial water ratio W and the change in water ratio ΔW at this time refer to the initial water ratio W and the change in water ratio ΔW in all particle sizes of the flux.

Characteristics required for fluxes for ESR include low viscosity, high desulfurization properties, and high electrical resistance. In order to obtain these characteristics, a CaF₂ component, an Al₂O₃ component, and a CaO component are used as the flux. On the other hand, the CaO component used at this time has high hygroscopicity when existing as a CaO crystal phase, thus, when the content of the CaO crystal phase increases, the hygroscopicity of the flux deteriorates and hydrogen embrittlement of the metal is more easily generated.

To improve the yield of ingots obtained by the ESR method, the present inventors particularly focused on the water ratio of the flux. Specifically, to accurately manage and optimize the water ratio of the flux, the present inventors measured the water ratio by the Karl Fischer method and designed the flux such that the initial water ratio W determined by the measurement was 0.05% by mass or less.

In addition, from the viewpoint of improving the yield of ingots, the present inventors considered that not only the water ratio of the flux but also changes therein over time are closely related to the yield. Based on this idea, the present inventors designed a flux for which the change in water ratio ΔW when placed in an environment of 30°C and 85% RH for 14 days was 0.03% by mass or less.

Using a flux that satisfies "the W is 0.05% by mass or less" and "the ΔW is 0.03% by mass or less" makes it possible to produce a high-purity metal having suppressed hydrogen embrittlement with a high yield while containing a highly hygroscopic CaO component. In addition, suppressing the hygroscopicity of the flux eliminates the need for a drying step for the flux during the production of the metal materials, making it possible to omit the drying step and to reduce costs during the production of the metal materials as a result.

To set the W and ΔW to the above values, for example:
(1) A calcined product including a CaF₂ component, which is a raw material for the flux, and a metal oxide including a CaO component and an Al₂O₃ component are separately produced and then blended, and/or
(2) preferably, a pulverized product including the CaO component and the Al₂O₃ component is sieved to remove highly hygroscopic fine powder having a low particle size before being blended with the calcined product including the CaF₂ component.

An explanation will be given below of (1) and an explanation will be given below of (2) in <Method For Manufacturing Flux>.

As described in (1) above, the flux of the present embodiment includes a mixture of particles including a CaF₂ component and particles including an Al₂O₃ component and a CaO component. In other words, particles including a CaF₂ component and particles including an Al₂O₃ component and a CaO component are produced separately and finally mixed to form a mixture. Due to this, it is possible to suitably suppress the hygroscopicity of the flux and to produce a high-purity metal having suppressed hydrogen embrittlement with a high yield.

The reason for this is not clear; however, it is considered that separately manufacturing and finally mixing the particles including a CaF₂ component and the particles including metal oxides such as an Al₂O₃ component and a CaO component suppresses the generation of a CaO crystal phase in the flux. As described above, the CaO crystal phase has high hygroscopicity, thus, it is considered that suppressing the generation of the CaO crystal phase in the flux makes it possible to more suitably suppress the hygroscopicity of the flux and to produce a high-purity metal having suppressed hydrogen embrittlement with a high yield.

As mentioned above, the generation of the CaO crystal phase that exists as a single phase in the flux is preferably suppressed from the viewpoint of the hygroscopicity of the flux. On the other hand, from a different viewpoint than suppressing hygroscopicity, for example, from the viewpoint of appropriately improving the desulfurization performance of the flux or the basicity of the slag obtained by melting the flux while maintaining a low melting point in the flux, a CaO component is preferably included in the flux. In other words, including a mixture of particles including the CaF₂ component and particles including an Al₂O₃ component and a CaO component makes it possible to appropriately control the amount of CaO crystal phase in the flux and to control, to a high level, the hygroscopicity, melting point, and desulfurization performance of the flux and the basicity of the slag obtained by melting the flux.

Here, the particles including the CaF₂ component preferably do not include a CaO crystal phase. Due to this, it is easier to control the amount of the CaO crystal phase in the flux and easier to control the hygroscopicity, melting point, and desulfurization performance of the flux and the basicity of the slag obtained by melting the flux.

Incidentally, Patent Document 1 describes, as a method for measuring water ratio, a method in which the water released by heating granular slag to 650°C is absorbed into magnesium perchlorate. However, with this method, since it is not possible to absorb all the water using the magnesium perchlorate and there is a possibility that substances other than water may be absorbed by the magnesium perchlorate, it is considered that the accuracy of the water quantification is low in comparison with the Karl Fischer method and it is not possible to appropriately measure the water ratio.

To further add, in Patent Document 1, measurement is carried out on the amount of moisture absorbed by flux placed in "a paper bag having a polyethylene lining", that is, a bag having a moisture blocking property and stored in an environment where the absolute humidity of the indoor air fluctuates widely between "4 to 17 g/m³". Under such evaluation conditions, it is not possible to say that the hygroscopicity of "the flux itself" is appropriately evaluated.

In the present embodiment, it is possible to appropriately measure the hygroscopicity of the flux itself by evaluating the hygroscopicity of the naked state flux that is not placed in a bag, under certain conditions such as an environment of 30°C and 85% RH. In the flux of the present embodiment, ΔW determined by this measurement is in a certain numerical range.

Next, a more specific explanation will be given of the flux of the present embodiment.

### (Flux Passing Rate)

When the flux of the present embodiment is passed through a sieve having a nominal opening of 500 um defined in accordance with JIS Z 8801-1:2019, the flux preferably has a passing rate of 18% or less, the passing rate being a ratio of a mass of the flux that fell under the sieve to a mass of the flux before sieving, more preferably 15% or less, even more preferably 12% or less, still more preferably 10% or less, and yet more preferably 8% or less. Due to this, it is possible to more suitably suppress the hygroscopicity of the flux and to produce a high-purity metal having suppressed hydrogen embrittlement with a high yield.

In addition, the lower limit of the passing rate is ideally 0%, but is realistically, for example, 0.00001% or more.

When the flux of the present embodiment is passed through a sieve having a nominal opening of 1.0 mm defined in accordance with JIS Z 8801-1:2019, the flux preferably has a passing rate of 40% or less, the passing rate being a ratio of a mass of the flux that fell under the sieve to a mass of the flux before sieving, more preferably 37% or less, even more preferably 35% or less, still more preferably 33% or less, yet more preferably 31% or less, yet more preferably 29% or less, and yet more preferably 28% or less. Thus, it is possible to more suitably suppress the hygroscopicity of the flux and to produce a high-purity metal having suppressed hydrogen embrittlement with a high yield.

In addition, the lower limit of the passing rate is preferably 18% or more, more preferably 20% or more, and even more preferably 21% or more. Thus, the "bulk" is reduced when storing the flux and it is easier to melt the flux during refining.

When the flux of the present embodiment is passed through a sieve having a nominal opening of 2.8 mm defined in accordance with JIS Z 8801-1:2019, the flux preferably has a passing rate of 90% or less, the passing rate being a ratio of a mass of the flux that fell under the sieve to a mass of the flux before sieving, more preferably 87% or less, even more preferably 84% or less, and still more preferably 82% or less. Thus, it is possible to more suitably suppress the hygroscopicity of the flux and to produce a high-purity metal having suppressed hydrogen embrittlement with a high yield.

In addition, the lower limit of the passing rate is preferably 45% or more, more preferably 55% or more, even more preferably 60% or more, still more preferably 65% or more, yet more preferably 70% or more, yet more preferably 74% or more, and yet more preferably 77% or more. Thus, the "bulk" is reduced when storing the flux and it is easier to melt the flux during refining.

### (Chemical Composition of Flux)

### • CaF₂ component and Al₂O₃ component

The flux of the present embodiment preferably includes a CaF₂ component and an Al₂O₃ component.

Here, in a case where the flux further includes a CaO component, the Al₂O₃ component is present as a calcium aluminate crystal phase (3CaO-Al₂O₃, 12CaO-7Al₂O₃, CaO-Al₂O₃, CaO-2Al₂O₃, CaO-6Al₂O₃). For this reason, in the present embodiment, the "Al₂O₃ component" includes not only the single Al₂O₃ component, but also the Al₂O₃ component in the calcium aluminate crystal phase.

More preferably, part or all of the CaF₂ component is present as a CaF₂ crystal phase and part or all of the Al₂O₃ component is present as a calcium aluminate crystal phase in the flux of the present embodiment.

When the flux includes the CaF₂ component and the Al₂O₃ component, there are advantages such as being able to obtain an appropriate flux melting temperature. In addition, the flux further including a CaO component and the Al₂O₃ component being present as a calcium aluminate crystal phase make it possible to more suitably set the flux melting temperature.

In a case where the flux of the present embodiment includes a CaF₂ component, the content ratio of the CaF₂ crystal phase in the entire crystal phase in the flux is preferably 20% by mass or more and 80% by mass or less and more preferably 35% by mass or more and 65% by mass or less.

In a case where the flux of the present embodiment includes an Al₂O₃ component, the total content ratio of the Al₂O₃ crystal phase and the calcium aluminate crystal phase in the entire crystal phase in the flux is preferably 20% by mass or more and 80% by mass or less and more preferably 35% by mass or more and 65% by mass or less.

In the flux of the present embodiment, to achieve the above crystal phase content ratio, the upper limit value of the amount of the CaF₂ component in the entire flux during raw material mixing is preferably 80% by mass or less, more preferably 75% by mass or less, even more preferably 65% by mass or less, and still more preferably 63% by mass or less. In addition, the lower limit value of the amount of the CaF₂ component in the entire flux is preferably 20% by mass or more, more preferably 30% by mass or more, even more preferably 35% by mass or more, and still more preferably 38% by mass or more.

Furthermore, the upper limit value of the amount of the Al₂O₃ component in the entire flux during raw material mixing is preferably 40% by mass or less, more preferably 37% by mass or less, even more preferably 35% by mass or less, and still more preferably 32% by mass or less. In addition, the lower limit value of the amount of the Al₂O₃ component in the entire flux is preferably 5% by mass or more, more preferably 10% by mass or more, even more preferably 15% by mass or more, and still more preferably 16% by mass or more.

### • CaO Component

In the flux of the present embodiment, the upper limit value of the amount of the CaO component in the entire flux during raw material mixing is preferably 40% by mass or less, more preferably 37% by mass or less, even more preferably 35% by mass or less, still more preferably 30% by mass or less, and yet more preferably 29% by mass or less.

The CaO component is a highly hygroscopic substance. Thus, reducing the amount of the CaO component in the entire flux during raw material mixing and reducing the amount of the CaO crystal phase in the flux makes it possible to more suitably suppress the hygroscopicity of the flux and to produce a high-purity metal having suppressed hydrogen embrittlement with a high yield.

In addition, in the flux of the present embodiment, from a different viewpoint than suppressing hygroscopicity, for example, from the viewpoint of appropriately improving the desulfurization performance of the flux or the basicity of the slag obtained by melting the flux while maintaining a low melting point in the flux, the lower limit value of the amount of the CaO component in the entire flux during raw material mixing is preferably 5% by mass or more, more preferably 10% by mass or more, even more preferably 15% by mass or more, still more preferably 20% by mass or more, and yet more preferably 21% by mass or more.

### • Other components: MgO component, SiO₂ component, and the like

The flux of the present embodiment may include one or a plurality of components other than the above components, such as an MgO component and an SiO₂ component.

It is considered that including an appropriate amount of an MgO component in the flux makes it possible to appropriately improve the basicity of the slag obtained by melting the flux, while maintaining a low melting point in the flux. This is preferable in terms of the ability to remove sulfur components during ingot production.

By including an appropriate amount of an SiO₂ component in the flux, it is easier to create a design in which the electrical resistance of the slag obtained by melting the flux is increased while maintaining performances such as the ability to remove sulfur components. This is preferable in that it is easier to melt the electrode metal. In addition, by including an appropriate amount of the SiO₂ component in the flux, the ferrite phase of the steel is strengthened and the strength of the refined steel tends to be increased.

In a case where the flux of the present embodiment further includes an MgO component, the content ratio thereof in the entire flux is preferably 0.005% by mass or more and 5.0% by mass or less and more preferably 0.01% by mass or more and 3.0% by mass or less.

In a case where the flux of the present embodiment further includes an SiO₂ component, the content ratio thereof in the entire flux is preferably 0.3% by mass or more and 3.0% by mass or less and more preferably 0.5% by mass or more and 2.5% by mass or less.

### • Method for Quantifying Amount of Each Component

It is possible to carry out quantitative analysis of the content ratio of each crystal phase of CaF₂, Al₂O₃, CaO, and calcium aluminate in which Al₂O₃ and CaO have reacted, for example, by analyzing powder X-ray diffraction (XRD) patterns using the Rietveld method.

More specifically, it is possible to determine each content ratio using a method comparing a diffraction intensity-incidence angle chart obtained by XRD analysis with an XRD pattern simulated from a crystal structure model and optimizing the mass fraction by the least squares method to minimize the residual difference between the experimental and calculated XRD patterns.

In addition, it is possible to quantify the amounts of chemical components such as the CaF₂ component, Al₂O₃ component, CaO component, MgO component, and SiO₂ component by an X-ray fluorescence analysis method (XRF), an ion electrode method, a combination of these methods, or the like.

Basically, other than the components described above, the flux of the present embodiment preferably includes as few components as possible. That is, the amount of impurities included in the flux of the present embodiment is preferably as small as possible. By reducing the amount of components other than the components described above, it is possible to suppress fluctuations in the characteristics of the slag obtained by melting the flux.

Specifically, the content ratio of the impurities in the entire flux is preferably 5% by mass or less, more preferably 3% by mass or less, and even more preferably 1% by mass or less.

### (Properties of Flux)

The properties of the flux of the present embodiment may vary. From the viewpoint of controlling the change in water ratio of the flux to a desired value (and thereby manufacturing a high-purity metal having suppressed hydrogen embrittlement with a high yield), the flux is preferably in granular form at room temperature. Room temperature is, for example, 25°C.

### <Method for Manufacturing Flux>

Next, description will be given of a method for manufacturing a flux according to the present embodiment.

The method for manufacturing a flux of the present embodiment includes a calcining step of calcining at least a compound including CaF₂ to obtain particles including the CaF₂, a melt-mixing step of melt-mixing at least a compound including CaO and a compound including Al₂O₃ to obtain a melted mixture including the CaO and the Al₂O₃, a pulverizing step of pulverizing the melted mixture including the CaO and the Al₂O₃ to obtain a pulverized product including the CaO and the Al₂O₃, a sorting step of passing the pulverized product including the CaO and the Al₂O₃ through a sieve having a nominal opening of 500 um defined in accordance with JIS Z 8801-1:2019 to obtain particles including the CaO and the Al₂O₃, and a mixing step of mixing at least the particles including the CaF₂ and the particles including the CaO and Al₂O₃ to obtain a flux.

A detailed description will be given below of each step.

### (Calcining Step)

First, a compound including the raw material CaF₂ component is calcined to obtain particles including the CaF₂ component. Through this step, it is possible to evaporate the water in the particles including the CaF₂ component and to more suitably suppress the hygroscopicity of the flux.

The calcining temperature and calcining time in this step may be any calcining temperature and calcining time at which it is possible to evaporate the water in the compound including the CaF₂ component and, for example, the calcining may be carried out at 1200°C for 1 hour.

### (Melt-Mixing Step)

Continuing, separately from the particles including the CaF₂ component obtained in the above-described calcining step, a compound including a CaO component and a compound including an Al₂O₃ component are melt-mixed to obtain a melted mixture including the CaO component and the Al₂O₃ component. Through this step, it is possible to achieve a suitable melting temperature for the flux of the present embodiment while controlling the content of the CaO component in the flux.

At this time, the melting temperature at which the compound including the CaO component and the compound including the Al₂O₃ component are melt-mixed is preferably 1800°C or higher. In addition, the melting time for melt-mixing the compound including the CaO component and the compound including the Al₂O₃ component is preferably 3 hours or more.

### (Pulverizing Step)

Continuing, as described in (2) above, the melted mixture including the CaO component and the Al₂O₃ component obtained in the above melt-mixing step is pulverized to obtain a pulverized product including the CaO component and the Al₂O₃ component. Through this step, it is possible to control the change in water ratio of the flux of the present embodiment and to more suitably suppress the hygroscopicity of the flux of the present embodiment.

As a method for pulverizing the melted mixture, any pulverization method known in the related art may be used as long as it is possible to achieve the change in water ratio in the flux of the present embodiment and examples thereof include pulverizing/dispersing machines such as ball mills, bead mills, vibration mills, turbo mills, mechanofusion, roll crushers, cone crushers, jaw crushers, hammer mills, disc mills, and roll mills; rock drills; vibration drills; impact drivers; highpressure gliding rolls; vertical mills such as vertical roller mills, and ball-type vertical mills, and the like.

### (Sorting Step)

Continuing, the pulverized product including the CaO component and the Al₂O₃ component obtained in the above-mentioned pulverizing step was passed through a sieve having a nominal opening of 500 um defined in accordance with JIS Z 8801-1:2019 to obtain particles including the CaO component and the Al₂O₃ component on the sieve. Through this step, it is possible to remove highly hygroscopic fine powder having a small particle size generated in the pulverizing step and to more suitably suppress the hygroscopicity of the flux of the present embodiment.

### (Mixing Step)

Finally, the particles including the CaF₂ component obtained in the above calcining step and the particles including the CaO component and the Al₂O₃ component obtained in the above sorting step are mixed.

By removing highly hygroscopic fine powder having a small particle size in advance, it is possible to control the change in water ratio of the flux of the present embodiment and, as a result, to more suitably suppress the hygroscopicity of the flux and to produce a high-purity metal having suppressed hydrogen embrittlement with a high yield.

### <Method for Manufacturing High-Purity Steel>

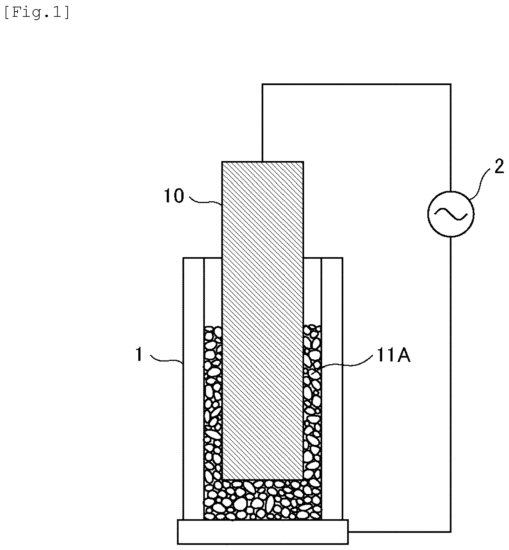

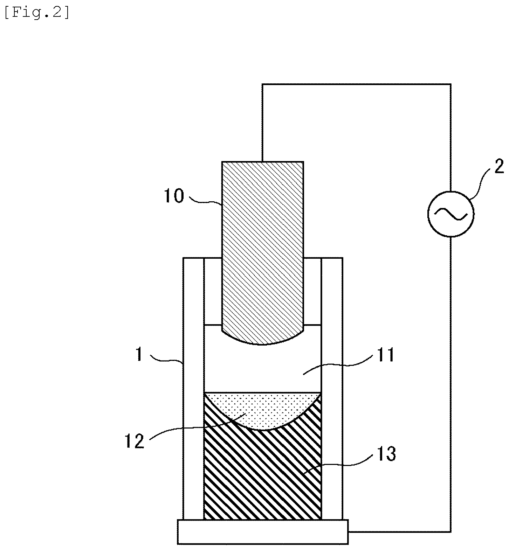

Fig. 1 and Fig. 2 are schematic diagrams for illustrating an example of a method for manufacturing a high-purity steel by refining raw steel using the ESR method. Specifically, Fig. 1 is a diagram schematically showing the state at the start of the production of a high-purity steel using the ESR method, while Fig. 2 is a diagram schematically showing the state after some time has passed from the start in Fig. 1.

In Fig. 1, a raw steel (an electrode 10) is electrically connected to one end of a power supply 2. The composition of the raw steel (the electrode 10) is not particularly limited. It is possible to set the composition to correspond to the high-purity steel to be obtained.

The raw steel (the electrode 10) is installed in an ESR furnace 1 to be movable up and down. At the start of production, a solid-form flux 11A (in granular form at room temperature) is spread over the sides and lower part of the raw steel (the electrode 10). The flux 11A has the composition described above.

The other end of the power supply 2 is electrically connected to the conductive furnace bottom of the ESR furnace 1.

The furnace wall of the ESR furnace 1 may be provided with a cooling unit such as a water cooling unit (not shown in Fig. 1) .

Although the ESR furnace 1 is shown in an open state in Fig. 1, the smelting of the raw steel may be performed in a closed-type ESR furnace in which the atmosphere is adjusted.

When manufacturing a high-purity steel, a current is applied from the power supply 2 to pass through the electrode 10 and the flux 11A. Then, the flux 11A and the tip end of the electrode 10 are melted by the resistance heat. The flux 11A is melted and becomes a slag 11. In addition, the metal melted from the tip end of the electrode 10 descends into the slag 11. At this time, impurities (such as sulfur atoms) in the metal are incorporated into the slag 11 and the raw steel is refined. The descended metal forms a melting pool 12 below the slag 11. Then, the result is gradually cooled to produce a high-purity steel (an ingot 13) (refer to Fig. 2 above).

In Fig. 2, as the ingot 13 and the melting pool 12 are formed, the liquid level of the slag 11 gradually moves upward. Thus, the electrode 10 is appropriately moved in accordance therewith and the electrode 10 is continuously remelted.

Through the above steps, it is possible to obtain a high-purity steel.

Although a description was given above of the embodiments of the present invention, these embodiments are merely examples of the present invention and it is possible to adopt various configurations other than those described above. In addition, the present invention is not limited to the above-described embodiments and the present invention includes modifications, improvements, and the like within a range in which it is possible to achieve the object of the present invention.

### Examples

A detailed description will be given of embodiments of the present invention based on Examples and Comparative Examples. The present invention is not limited to the Examples.

### (Raw Material for Flux)

First, as raw materials, the below compound including a CaF₂ component, compound including an Al₂O₃ component, and compound including a CaO component were prepared.
- Compound including a CaF₂ component: Produced by FujiFilm Wako Pure Chemical Industries, Ltd., product name = calcium fluoride, purity 98% by mass or more
- Compound including Al₂O₃ component: Produced by Nippon Light Metal Co., Ltd., product name = SMM-23A, purity 99% by mass or more
- Compound including CaO component: Produced by Yoshizawa Lime Industry Co., Ltd., product name = quicklime, purity 99% by mass or more

Here, the compound including the CaF₂ component included a small amount of an MgO component, an SiO₂ component, and the like.

By mixing these raw materials in the raw material ratios shown in Table 1 and carrying out processing according to the below-described (Method for Manufacturing Calcined Product) or (Method for Manufacturing Melted Product), particles 1 (particles including a CaF₂ component) and particles 2 and 3 (particles including a metal oxide) were obtained.

**[Table 1]**

| | | Particles 1 | Particles 2 | Particles 3 |
|---|---|---|---|---|
| | | Calcined product | Melted product | Melted product |
| Raw material ratio [parts by mass] | CaF₂ | 96.0 | | |
| | Al₂O₃ | 0.2 | 43.5 | 65.1 |
| | CaO | | 55.0 | 33.4 |

In Table 1, "Calcined product" and "Melted product" indicate the method for manufacturing particles.

The methods for manufacturing the "Calcined product" and "Melted product" are shown below.

### (Method for Manufacturing Calcined Product)

The raw materials described above were placed in a rotary kiln according to the raw material ratios in Table 1 and calcined at 1200°C for 1 hour to obtain particles.

### (Method for Manufacturing Melted Product)

The raw materials described above were mixed using a gravity mixer according to the raw material ratios in Table 1 to form a nearly uniform mixture.

Thereafter, the mixture was injected in a three-phase arc furnace and heated and melted at 1800°C or higher under the conditions of a current value of 3.0 to 3.5 kA and a voltage value of 150 to 200 V to obtain a melted mixture. The melting time at this time was 3 hours.

After cooling, the obtained melted mixture was pulverized using a cone crusher and was sorted by being passed through a sieve having a nominal opening of 4.75 mm defined in accordance with JIS Z 8801-1:2019. At this time, the melted mixture that did not pass through the sieve (that remained on the sieve) was pulverized again using a cone crusher and sorted by being passed through a sieve having a nominal opening of 4.75 mm defined in accordance with JIS Z 8801-1:2019. These operations were performed until all of the melted mixture passed through the sieve (fell under the sieve). Thereafter, the particles were obtained by sorting by being passed through a sieve having a nominal opening of 500 um defined in accordance with JIS Z 8801-1:2019.

### <Examples 1 and 2>

The fluxes of Examples 1 and 2 were obtained by mixing the obtained particles 1 to 3 using a gravity mixer. The mixing ratio was 62.2% by mass for the particles 1 and 37.8% by mass for the particles 2 in Example 1 and 40.2% by mass for the particles 1, 35.4% by mass for the particles 2, and 24.4% by mass for the particles 3 in Example 2.

### <Comparative Example 1>

First, the raw materials, which were a compound including a CaF₂ component, a compound including an Al₂O₃ component, and a compound including a CaO component, were mixed using a gravity mixer to form a substantially uniform mixture. The mixing ratio was 42.3% by mass for the compound including the CaF₂ component, 31.4% by mass for the compound including the Al₂O₃ component, and 27.3% by mass for the compound including the CaO component.

Next, this mixture was processed using the same method as described above (Method for Manufacturing Melted Product), except for not being passed through a sieve having a nominal opening of 500 um defined in accordance with JIS Z 8801-1:2019, and the obtained particles were designated as Comparative Example 1.

### <Evaluation>

The flux of each of the obtained Examples and Comparative Example was evaluated by the following method.

### (Measurement of Initial Water Ratio W and Hygroscopicity)

To examine not only the hygroscopicity of the flux as a whole, but also the difference in hygroscopicity depending on particle size, fluxes were separated by particle size and exposed to an environment of 30°C and 85% RH. Specifically, the flux sieving, water ratio measurement, and the like were carried out using the following steps (1) to (6).

(1) The flux was passed through a sieve having a nominal opening of 4.75 mm (equivalent to an ASTM E11 No. 4 sieve) defined in accordance with JIS Z8801-1:2019 and it was confirmed that no sieve residue remained (at this time, sieve residue was not confirmed in any of Examples 1 and 2 and Comparative Example 1) .
(2) The flux was passed through a sieve having a nominal opening of 2.8 mm (equivalent to an ASTM E11 No. 7 sieve) defined in accordance with JIS Z8801-1:2019. Due to this, fluxes having a particle size of 4.75 to 2.8 mm were sorted. Then, the mass of the sieve residue that was not able to pass through the sieve was measured.
(3) The component that passed through the sieve in (2) above was passed through a sieve having a nominal opening of 1 mm (equivalent to an ASTM E11 No. 18 sieve) defined in accordance with JIS Z8801-1:2019. Due to this, fluxes having a particle size of 1 to 2.8 mm were sorted. Then, the mass of the sieve residue that was not able to pass through the sieve was measured.
(4) The component that passed through the sieve in (3) above was passed through a sieve having a nominal opening of 500 um (equivalent to an ASTM E11 No. 35 sieve) defined in accordance with JIS Z8801-1:2019. Due to this, fluxes having a particle size of 0.5 to 1 mm and fluxes having a particle size of 0.5 mm or less were sorted. Then, the mass of the flux (sieve residue) having a particle size of 0.5 to 1 mm and the mass of the flux (component that passed through the sieve) having a particle size of 0.5 mm or less were measured.
(5) The flux having a particle size of 2.8 to 4.75 mm, the flux having a particle size of 1 to 2.8 mm, the flux having a particle size of 0.5 to 1 mm, and the flux having a particle size of 0.5 mm or less obtained above were each applied separately to an apparatus (NittoSeiko Analytech Co., Ltd./Model CA-310) and the initial water ratio W (water ratio when the number of storage days is 0) was determined by the Karl Fischer method.
(6) For each of the fluxes of each particle size described above, 10 g of each particle size was separately placed at 5 points (total 15 points) in a cylindrical aluminum tray (upper part diameter: ϕ59 mm, lower part diameter: ϕ45 mm) having an open upper part and aged in an environment of 30°C and 85% RH. Then, 7 days, 14 days, and 28 days after the start of aging, the aluminum trays in which the fluxes of each particle size were placed were taken out together with the fluxes inside and, after sufficiently mixing, the water ratios W₇, W₁₄, and W₂₈ after 7, 14, and 28 days were determined for each particle size in the same manner as in (5) above.
(7) In addition, separately from the measurement of the water ratio of each flux of each particle size above, for the fluxes (fluxes of all particle sizes) for which the sorting step of (1) to (4) above was not performed, the initial water ratio W and the water ratios W₇, W₁₄, and W₂₈ after 7, 14, and 28 days were determined in the same manner as in (5) and (6) above.

Thereafter, in the fluxes of all particle sizes, the value of the difference between the water ratio W₁₄ after 14 days and the initial water ratio W was calculated as the change in water ratio ΔW. The results are shown in Table 2.

**[Table 2]**

| | Blending ratio [% by mass] | | | | | | | Water ratio W [% by mass] | | | | | ΔW |
|---|---|---|---|---|---|---|---|---|---|---|---|---|---|
| | | | | | | | | Particle size [mm] | storage days | | | | |
| | Particles 1 | Particles 2 | Particles 3 | CaF₂ | Al₂O₃ | CaO | Total | | 0 days | 7 days | 14 days | 28 days | |
| Comparative Example 1 | | | | 42.3 | 31.4 | 27.3 | 101.0 | 4.75 to 2.8 | 0.032 | 0.086 | 0.109 | 0.120 | 0.112 |
| | | | | | | | | 2.8 to 1.0 | 0.032 | 0.084 | 0.102 | 0.122 | |
| | | | | | | | | 1.0 to 0.5 | 0.049 | 0.143 | 0.164 | 0.198 | |
| | | | | | | | | 0 to 0.5 | 0.090 | 0.307 | 0.350 | 0.389 | |
| | | | | | | | | All particle sizes | 0.044 | 0.132 | 0.156 | 0.178 | |
| Example 1 | 62.2 | 37.8 | 0.0 | | | | 100.0 | 4.75 to 2.8 | 0.005 | 0.006 | 0.007 | 0.007 | 0.004 |
| | | | | | | | | 2.8 to 1.0 | 0.007 | 0.010 | 0.010 | 0.011 | |
| | | | | | | | | 1.0 to 0.5 | 0.015 | 0.023 | 0.025 | 0.026 | |
| | | | | | | | | 0 to 0.5 | 0.043 | 0.057 | 0.066 | 0.067 | |
| | | | | | | | | All particle sizes | 0.011 | 0.014 | 0.015 | 0.016 | |
| Example 2 | 40.2 | 35.4 | 24.4 | | | | 100.0 | 4.75 to 2.8 | 0.006 | 0.007 | 0.008 | 0.009 | 0.005 |
| | | | | | | | | 2.8 to 1.0 | 0.009 | 0.011 | 0.013 | 0.014 | |
| | | | | | | | | 1.0 to 0.5 | 0.024 | 0.034 | 0.037 | 0.039 | |
| | | | | | | | | 0 to 0.5 | 0.065 | 0.086 | 0.097 | 0.099 | |
| | | | | | | | | All particle sizes | 0.014 | 0.017 | 0.019 | 0.020 | |

In Table 2, when looking at the change in water ratio over time separated by particle size, it is understood that the smaller the particle size, the higher the water ratio tends to be.

### <Production of High-Purity Steel (Refining)>

The fluxes of Examples 1 and 2, for which equal to or more than 28 days passed after production, were used as is without performing a drying process in advance to refine raw steel including impurities such as sulfur using an ESR furnace as shown in Figs. 1 and 2 to produce ingots. It was confirmed that it is possible to produce ingots having sufficiently suppressed hydrogen embrittlement with a good yield.

On the other hand, when the flux of Comparative Example 1, for which more than 28 days passed after production, was used as is without performing a drying process in advance instead of the fluxes of Examples 1 and 2, hydrogen embrittlement was not suppressed in comparison with Examples 1 and 2 and the result was a poor ingot yield.

From the above, it is understood that refining raw steel by the ESR method using a flux for which the W is 0.05% by mass or less and the ΔW is 0.03% by mass or less makes it possible to produce a high-purity metal having suppressed hydrogen embrittlement with a high yield while containing a highly hygroscopic CaO component.

This application claims priority based on Japanese Patent Application No. 2021-182353 filed on November 9, 2021, and the entire disclosure thereof is incorporated herein.

### REFERENCE SIGNS LIST

- 1:: ESR furnace
- 2:: Power supply
- 10:: Electrode
- 11A:: Flux
- 11:: Slag
- 12:: Melting pool
- 13:: Ingot

## Claims

1. A flux used for an electroslag remelting method, the flux comprising:
a mixture of particles including a CaF₂ component and particles including an Al₂O₃ component and a CaO component,
wherein the flux has a W of 0.05% by mass or less and a ΔW of 0.03% by mass or less, for which the W is an initial water ratio in the flux, which is determined by a Karl Fischer method, and the ΔW is a change in water ratio represented by a difference between a water ratio W₁₄ when the flux is placed in an environment of 30°C and 85% RH for 14 days and the initial water ratio W.

2. The flux according to claim 1,
wherein the W is 0.02% by mass or less.

3. The flux according to claim 1 or 2,
wherein the ΔW is 0.01% by mass or less.

4. A method for manufacturing the flux according to any one of claims 1 to 3, the method comprising:
a calcining step of calcining at least a compound including a CaF₂ component to obtain particles including the CaF₂ component;
a melt-mixing step of melt-mixing at least a compound including a CaO component and a compound including an Al₂O₃ component to obtain a melted mixture including the CaO component and the Al₂O₃ component;
a pulverizing step of pulverizing the melted mixture including the CaO component and the Al₂O₃ component to obtain a pulverized product including the CaO component and the Al₂O₃ component;
a sorting step of passing the pulverized product including the CaO component and the Al₂O₃ component through a sieve having a nominal opening of 500 um defined in accordance with JIS Z 8801-1:2019 to obtain particles including the CaO component and the Al₂O₃ component over the sieve; and
a mixing step of mixing at least the particles including the CaF₂ component and the particles including the CaO component and the Al₂O₃ component over the sieve obtained in the sorting step to obtain a flux.

5. A method for manufacturing a high-purity steel comprising a step of refining raw steel into a high-purity steel by remelting the raw steel by an electroslag remelting method,
wherein a melted product of the flux according to any one of claims 1 to 3 is used as a melted slag.
